Europäisches Patentamt

(19) European Patent Office

Office européen des brevets

(11) **EP 0 727 690 A1**

(12) **EUROPEAN PATENT APPLICATION**

(43) Date of publication:
21.08.1996 Bulletin 1996/34

(51) Int. Cl.$^6$: **G02F 1/1337**, G02F 1/139

(21) Application number: 96102279.5

(22) Date of filing: 15.02.1996

(84) Designated Contracting States:
DE FR GB

(30) Priority: 15.02.1995 JP 26784/95

(71) Applicants:
• STANLEY ELECTRIC CO., LTD.
Yokohama-shi, Kanagawa (JP)
• Kobayashi, Shunsuke
Tokyo (JP)

(72) Inventors:
• Sugiyama, Takashi,
c/o Stanley Elec. Co., Ltd.
Yokohama-shi, Kanagawa (JP)

• Hashimoto, Toru,
c/o Stanley Elec. Co., Ltd.
Yokohama-shi, Kanagawa (JP)
• Kobayashi, Shunsuke,
c/o Stanley Elec. Co., Ltd.
Yokohama-shi, Kanagawa (JP)

(74) Representative: Wagner, Karl H., Dipl.-Ing. et al
WAGNER & GEYER
Patentanwälte
Gewürzmühlstrasse 5
80538 München (DE)

(54) **Guest-host type liquid crystal display with multi-domain orientation**

(57) A guest-host type liquid crystal display including: a pair of substrates; and a guest-host type liquid crystal layer containing liquid crystal and dichroic pigment sandwiched between the pair of substrates, wherein the liquid crystal in the guest-host type liquid crystal layer has no twist angle or a constant twist angle in the direction perpendicular to the surface of the substrate and domains of two or more orientation directions are distributed in a plane parallel to the surface of the substrate. A guest-host type liquid crystal display device containing dichroic pigment and having a high contrast is provided.

# FIG.1A

## Description

BACKGROUND OF THE INVENTION

a) Field of the Invention

The present invention relates to a liquid crystal display and more particularly to a guest-host type liquid crystal display containing dichroic pigment or dye.

b) Description of the Related Art

Various types of liquid crystal displays are used in a wide diversity of industrial fields. Light is controlled by utilizing the property of liquid crystal molecules of a liquid crystal display that they tend to be arranged in a predetermined orientation. Typically, light is turned on and off in accordance with the orientation of liquid crystal controlled by an electric field.

In a usual liquid crystal display device, liquid crystal molecules themselves control the polarization direction or scattering of incident light. A polarizing plate is used for aligning the polarization direction of light incident to a liquid crystal layer.

Dichroic pigment is usually made of rod type molecules and the light absorption characteristics thereof change with the direction of dichroic pigment molecules. The spectra of light passing through a dichroic pigment molecule changes with whether its longitudinal axis is parallel or perpendicular to electric vector of light.

Liquid crystal molecules can be used for the control of the direction of dichroic pigment molecules. Prolonged dichroic pigment molecules (guest) mixed with prolonged liquid crystal molecules (host) take similar orientations like those of adjacent liquid crystal molecules. The incident light absorption characteristics can be controlled by the orientations of dichroic pigment molecules.

Such guest-host type liquid crystal displays known in the art use nematic, chiral nematic, or cholesteric liquid crystals. A pair of substrates of a guest-host type liquid crystal display is subjected to an orientation process such as rubbing so as to make the orientation direction of liquid crystal molecules have a predetermined relationship over the whole area of the substrate. Therefore, the liquid crystal molecules of the guest-host type liquid crystal display are orientated in a predetermined direction over the whole area of the substrate. In the thickness direction of the liquid crystal layer, the molecules are orientated to have a predetermined twist angle.

Guest-host type liquid crystal displays are not necessary to use polarizing plates and hence can provide bright display screens. A reflection type guest-host liquid crystal display has a reflection plate in front of, or at the back of a back substrate of a pair of substrates.

Because a guest-host type liquid crystal display has no polarizing plate, it has a high transmittance, but the contrast is low.

Conventional liquid crystal displays (LCDs) are manufactured by injecting guest-host (GH) type liquid crystals with a d/p value of about 0.75 or larger into a liquid crystal cell subjected to an orientation process such as rubbing (where $\underline{d}$ is a cell thickness and $\underline{p}$ is a natural chiral pitch of liquid crystals). These conventional liquid crystal displays are sometimes associated with stripe domain defects which lower the contrast, and with hysteresis of electro-optic characteristics which results in poor display quality particularly in the case of a multiplex drive type.

SUMMARY OF THE INVENTION

It is an object of the present invention to provide a guest-host type liquid crystal display having a high contrast.

It is another object of the present invention to provide a guest-host type liquid crystal display with less stripe domain defects and less hysteresis.

According to one aspect of the present invention, there is provided a guest-host type liquid crystal display comprising: a pair of substrates; and a guest-host type liquid crystal layer containing liquid crystal and dichroic pigment sandwiched between the pair of substrates, wherein the liquid crystal in the liquid crystal layer has no twist angle or a constant twist angle in the direction perpendicular to the surface of the substrate and is oriented in two or more directions in a plane parallel to the surface of the substrate.

It has been found that the contrast of a guest-host type liquid crystal display improves if the liquid crystal layer has two or more orientation directions in directions parallel to the surface of the substrate.

With the above structure, the contrast of a guest-host type liquid crystal display can be improved. The effects of improving the contrast are noteworthy particularly for a reflection type liquid crystal display.

Since an orientation process such as rubbing is not necessary for substrates, the manufacture cost can be lowered. Furthermore, point defects or electrostatic failures to be caused by an orientation process can be reduced. If liquid crystal displays have a d/p value of 0.75 or larger, stripe domain defects and hysteresis can be suppressed.

BRIEF DESCRIPTION OF THE DRAWINGS

Fig.1A is a cross sectional view of a liquid crystal display, Figs.1B to 1D are schematic diagrams showing the structure of micro domains over the substrate area, and Fig.1E is a perspective view showing an example of the electrode structure, according to an embodiment of the invention.

Figs.2A and 2B are schematic cross sectional views illustrating a liquid crystal injection process.

Figs.3A to 3D are schematic cross sectional views illustrating a liquid crystal injection process.

Figs.4A and 4B are schematic cross sectional views of a liquid crystal display according to another embodiment of the invention.

Figs.5A is a schematic cross sectional view of a liquid crystal display according to another embodiment of the invention, and Fig.5B is a schematic diagram illustrating a chiral pitch of chiral nematic liquid crystal.

Fig.6 is a schematic perspective view illustrating the manufacture of an orientation structure using an optical polarization memory film.

Figs.7A to 7D are schematic diagrams showing examples of the orientation structure of adjacent micro domains having orientation directions shifted by 90 degrees.

## DETAILED DESCRIPTION OF THE PREFERRED EMBODIMENTS

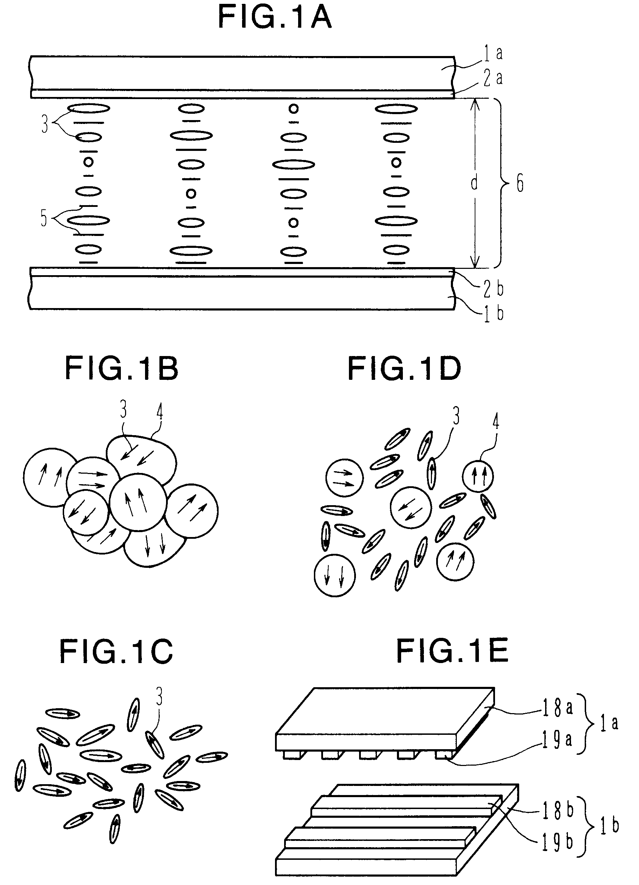

Figs.1A to 1E show a liquid crystal display device according to an embodiment of the invention. Fig.1A is a cross sectional view showing part of the liquid crystal display, Figs.1B to 1C are schematic diagrams showing the orientations of liquid crystal molecules over a substrate area, and Fig.1E is a perspective view showing an example of the electrode structure.

As shown in Fig.1A, the liquid crystal display device defines a liquid crystal cell by a pair of glass substrates 1a and 1b, and a liquid crystal layer 6 is embraced in the liquid crystal cell. Orientation films 2a and 2b not subjected to an orientation process are formed on the glass substrates 1a and 1b. Since the orientation films 2a and 2b are not subjected to the orientation process, the liquid crystal layer 6 injected into the liquid crystal cell receives a force which orientates liquid crystals in parallel to the substrate plane, but the liquid crystal layer 6 does not receive any force which orientates the liquid crystal in the directions in a plane parallel to the substrate.

The liquid crystal layer 6 contains nematic, chiral nematic, or cholesteric liquid crystal molecules 3 mixed with dichroic pigment or dye molecules 5.

Since the substrates have no particular orientation direction, the liquid crystal layer 6 is orientated in random directions from position to position. However, since the thickness of the liquid crystal cell is as small as about several μm, the liquid crystal layer 6 is orientated in the cell thickness direction depending upon the property of liquid crystal. Fig.1A illustrates the orientations of chiral nematic liquid molecules. The liquid crystal molecules 3 show a predetermined twist from one substrate 1a toward the other substrate 1b, in accordance with the chirality of chiral nematic liquid. The dichroic pigment molecules 5 are orientated in accordance with the orientations of the liquid crystal molecules 3.

Figs.1B to 1D illustrate the orientations of liquid crystal molecules on a substrate when the substrates are not subjected to an orientation process.

In Fig.1B, a number of micro domains 4 are formed over the substrate area. Each of these micro domains is distributed from one substrate toward the other substrate with a zero twist or a predetermined twist. The liquid crystal molecules 3 in each micro domain 4 in a plane spaced from the substrate plane by a predetermined distance are orientated parallel in a predetermined direction. This orientation direction varies with each micro domain 4, and the orientations of liquid crystal molecules over the whole substrate area are random.

In Fig.1C, the orientation directions of liquid crystal molecules 3 successively change over the substrate area. This successive change is not governed by any particular rule, and the orientations of liquid crystal molecules over the whole substrate area are random.

In Fig.1D, micro domains 4 are dispersively distributed. The liquid crystal molecules 3 in each micro domain are orientated generally in one direction. In the region between adjacent micro domains 4, the liquid crystal molecules 3 successively change their orientation directions. This orientation state shown in Fig.D may be considered as a combination of the orientations shown in Figs.1B and 1C.

Such random orientations are obtained essentially if the substrates of a liquid crystal cell are not subjected to any orientation process, and are detailed in the description of embodiments of a patent application assigned to the present assignee (Japanese Patent Laid-open Publication No.6-194655, corresponding to USP 5,453,862 issued on September 26, 1995 (filed on September 1, 1993 which is incorporated herein by reference).

The substrates 1a and 1b shown in Fig.1A have liquid crystal drive structures formed thereon.

Fig.1E shows examples of such liquid crystal drive structures with simple matrix electrodes. On glass substrates 18a and 18b, parallel stripe electrodes 19a and 19b are formed, cross points thereof constituting a matrix. An active matrix structure and other structures may also be used.

If a macro domain structure having fine and homogenized micro domains is to be formed, it is preferable that after liquid crystal is injected into a liquid crystal cell, the liquid crystal molecules are driven into an isotropic phase by heating or other means, and thereafter they are gradually cooled. Such a method is detailed in the description of embodiments of a patent application assigned to the present assignee (Japanese Patent Laid-open Publication No.6-289358, corresponding to US patent application S.N. 08/23,197 (filed on February 25, 1993 which is incorporated herein by reference).

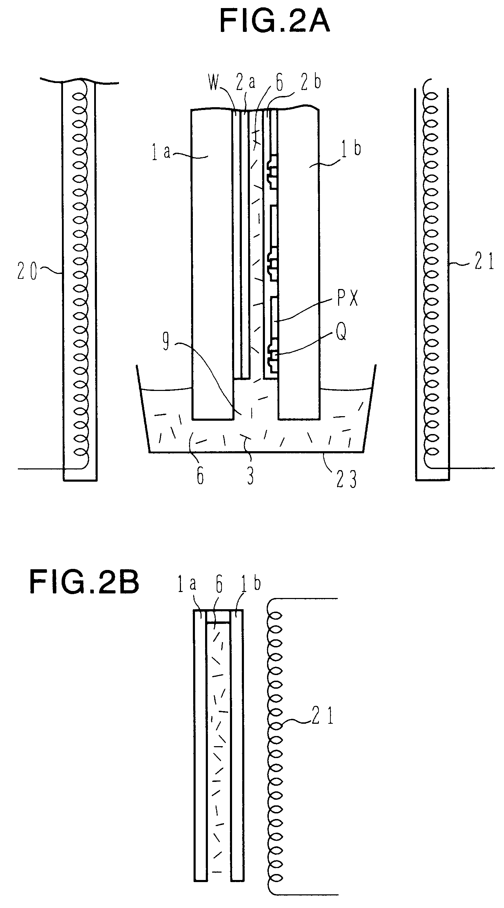

Figs.2A and 2B illustrate a process of injecting liquid crystal into a liquid crystal cell. As shown in Fig.2A, a pair of glass substrates 1a and 1b facing each other defines a liquid crystal cell. A wiring layer W such as a common electrode is formed on the substrate 1a, and an orientation film 2a is formed on the wiring layer W. An active drive circuit with thin film transistors Qs and pixel electrodes PXs is formed on the other substrate 1b, and an orientation film 2b is formed on the active drive circuit. The orientation films 2a and 2b may be made of polyimide. The orientation films 2a and 2b are not subjected to an orientation process such as rubbing.

Liquid crystal material 6 containing liquid crystal and dichroic pigment or dye is filled in a vessel 23, and is heated from both sides of the cell by heaters 20 and 21. The liquid crystal cell is partially immersed in the liquid crystal 6 in the vessel 23 to inject the liquid crystal from an inlet port 9 into the liquid crystal cell. For example, this injection may be vacuum injection or capillary injection.

After the liquid crystal 6 in an isotropic phase is injected into the liquid crystal cell, the power supplied to the heaters 20 and 21 is lowered or shut down to lower the temperature of the liquid crystal 6 and form a liquid crystal layer having an orientation state such as shown in Figs.1B to 1D.

Although the liquid crystal is heated from both sides of the liquid crystal cell by the heaters such as shown in Fig.2A, it may be heated from one side of the liquid cell such as shown in Fig.2B. If the power supplied to the heater 20 on one side only is shut down during the cooling after injection and the heating state of the heater 21 is maintained on the other side near the substrate 1b formed with the thin film transistors (TFTs), then the liquid crystal layer 6 in the liquid crystal cell is orientated starting from the other substrate 1a side.

In the injection process illustrated in Fig.2A, after the liquid crystal is heated and changed to an isotropic phase, it is injected into the liquid crystal cell. An active drive type liquid crystal cell has drive elements such as TFTs formed on one substrate so that the surface of the driver substrate is irregular. It is preferable for such a cell to be subjected to vacuum injection in order not to generate air bubbles during the liquid crystal injection process. However, with the vacuum injection and heated liquid crystal, volatile components in the liquid crystal are evaporated and the liquid crystal composition changes with time. It is therefore desired to inject liquid crystal at a room temperature without heating it.

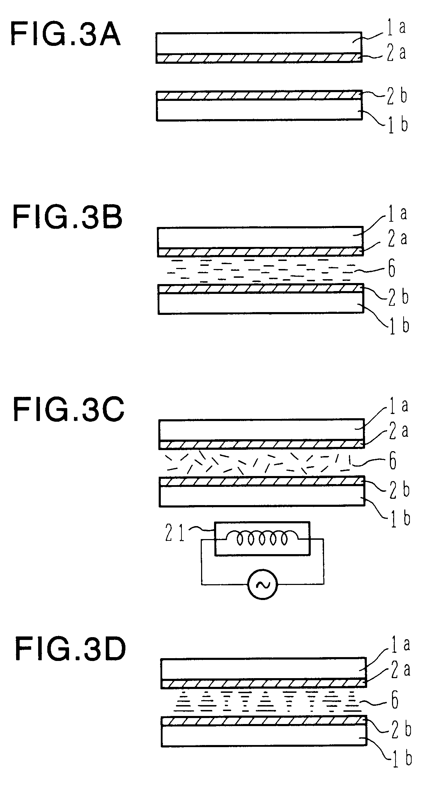

Figs.3A to 3D illustrate a method of injecting liquid crystal at a room temperature. As shown in Fig.3A, a pair of glass substrates 1a and 1b is prepared to constitute a liquid crystal cell. Orientation films 2a and 2b are formed on the substrates 1a and 1b. As described earlier, the orientation films 2a and 2b are not subjected to any orientation step.

As shown in Fig.3B, liquid crystal material 6 is injected into the liquid crystal cell at a room temperature. The liquid crystal material 6 contains liquid crystal molecule mixed with dichroic pigment molecules.

After the liquid crystal material 6 is injected into the liquid crystal cell, the liquid crystal cell is heated by a heater 21 and the liquid crystal material 6 is brought into an isotropic phase, as illustrated in Fig.3C.

As shown in Fig.3D, the liquid crystal is gradually cooled thereafter so that the liquid crystal material 6 changes again to the liquid crystal phase and is orientated generally in parallel to the substrate plane. Since the orientation films 2a and 2b are not subjected to an orientation process, a number of minute micro domains are generated over the substrate area.

The liquid crystal display device shown in Fig.1A uses guest-host type liquid crystal and does not require a polarizing plate. Although not shown in Figs.3A to 3D, the glass substrate 1 is formed with electric elements for controlling the liquid crystal orientation, such as electrodes and thin film transistors (TFTs) shown in Figs.1E and 2A.

Liquid crystal display devices of the above embodiment were formed in the following manner. Guest-host type liquid crystal material was prepared by mixing chiral nematic liquid crystal having a natural chiral pitch of 15.43 μm, with dark blue pigment having a maximum absorption wavelength of 600 nm (G256 manufactured by Japanese Photosensitive Pigment Laboratory) by an amount of 0.75 wt%. The guest-host liquid crystal material was injected into a cell of 9 μm thick at a temperature (120°C) higher than a nematic-isotropic phase transition temperature (about 105°C) for completing a liquid crystal display device. The twist angle of the liquid crystal display device manufactured under the above conditions was about 210°. For comparison, conventional type liquid crystal display devices were also manufactured by using rubbed substrates, having a twist angle of 210°. The electro-optic characteristics of liquid crystal display devices according to the embodiment and conventional techniques were measured.

The measurement was performed by using the liquid crystal display devices as transmission type liquid crystal display devices. The liquid crystal display device of the embodiment had an improved contrast of 1.97 as compared to a contrast of 1.87 of the conventional liquid crystal display device. The improved contrast can be ascribed to that the orientation directions of liquid crystal are random.

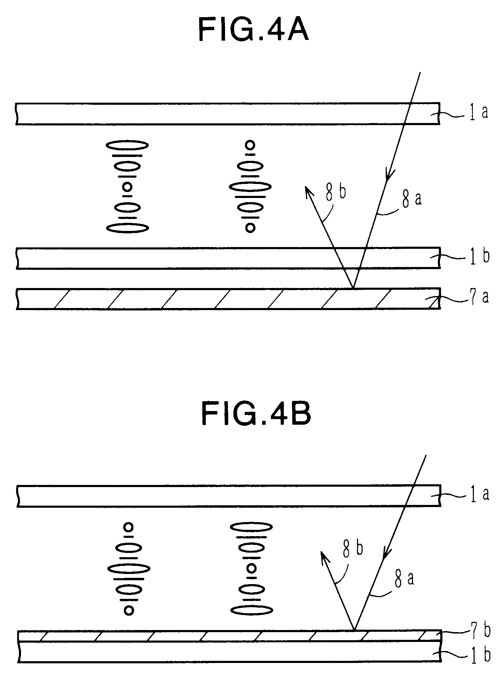

Figs.4A and 4B show liquid crystal display devices according to other embodiments of the invention. The liquid crystal display device shown in Fig.4A has a reflection plate 7a disposed at the back of a back substrate 1b of the liquid crystal cell, and the other structures are the same as the device shown in Fig.1A.

Liquid crystal display devices of this embodiment and conventional liquid crystal display devices subjected to an orientation process were prepared and the electro-optic characteristics were measured. The liquid crystal display device of this embodiment had a considerably improved contrast of 3.35 as compared to a contrast of 2.37 of the conventional liquid crystal display device. A reflectance with no applied voltage was 20.7 % for a conventional liquid crystal display device, whereas it was 15.0 % for an embodiment liquid crystal display device. The characteristics in the off-state are therefore improved. The improved contrast can be ascribed to a difference between the off-state characteristics.

The improved contrast may be considered as resulting in the following manner.

Incident light 8a enters a liquid crystal display device and is reflected by a reflection plate 7a as reflected light 8b. Optical paths of the incident and reflected light beams 8a and 8b, except a vertical or normal incident light beam, are different. If there are different micro domains on the optical paths of the incident and reflected light beams 8a and 8b, these micro domains have different orientation directions.

On the other hand, portions of a conventional liquid crystal display device have a uniform orientation state over the substrate area. Therefore, the incident and reflected light beams 8a and 8b pass through the liquid crystal layer having the same characteristics.

If the optical path of incident light and that of reflected light are considered to pass through different liquid crystal cells, the characteristics of a reflection type liquid crystal cell can be approximated to the characteristics of stacked two liquid crystal cells. A conventional liquid crystal display device corresponds to stacked two liquid crystal cells having the same characteristics, whereas an embodiment liquid crystal display device corresponds to stacked two liquid crystal cells having different characteristics.

Light absorption becomes maximum if two stacked liquid crystal cells have right-angle orientation directions. The conventional liquid crystal display device has the same orientation direction of the two stacked cells, whereas the embodiment liquid crystal display device has different orientation directions of the two stacked cells. The improved contract can be ascribed to this fact.

The liquid crystal display device shown in Fig.4B has a reflection plate 7b disposed in front of a back substrate 1b of the liquid crystal cell, and the other structures are the same as the device shown in Fig.4A excepting that the reflection plate 7b is disposed in the liquid crystal cell and not outside thereof. Liquid crystal display cells of this embodiment were also prepared to measure a difference of the electro-optic characteristics from conventional liquid crystal display devices. The contrast of an embodiment liquid crystal display device was considerably improved to 3.18 as compared to the contrast of 2.33 of a conventional liquid crystal display device.

In this embodiment, although incident light 8a and reflected light 8b are at the same point on the reflection plate 7b, as the reflected light 8b propagates, its optical path moves apart from the optical path of the incident light. Therefore, the situation similar to Fig.4A is established and the improved contrast can be ascribed to the discussion made for Fig.4A.

The liquid crystal display devices prepared for the comparisons had liquid crystal cells with d/p of 0.583. A liquid crystal display device having such a d/p value does not generate stripe domain defects and hysteresis even when it is a conventional type. A conventional type liquid crystal display device having a d/p value of about 0.75 or higher generates stripe domain defects and hysteresis.

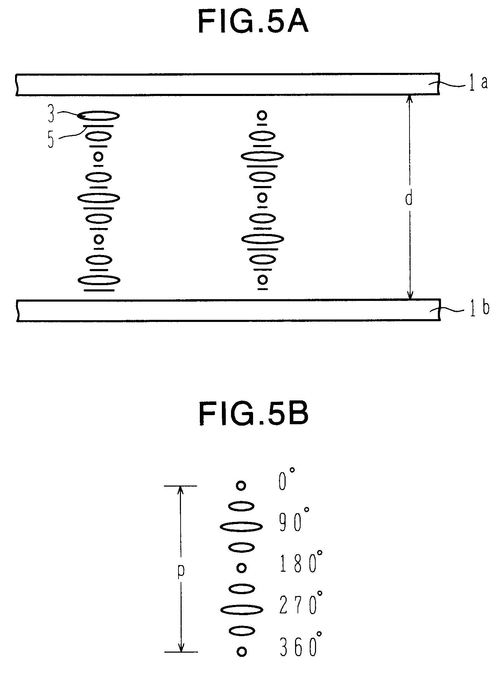

Fig.5A shows the structure of a liquid crystal display device. This structure is similar to the embodiment shown in Fig.1A but a d/p value is set to about 0.75 or higher. As shown in Fig.5B, the value d/p is set to about 1.0, where $\underline{p}$ represents a natural chiral pitch of chiral nematic liquid crystal, and $\underline{d}$ represents a thickness of a liquid crystal cell.

For example, guest-host type liquid crystal material was prepared by mixing chiral nematic liquid crystal having a natural chiral pitch of 8.5 μm, with dark blue pigment having a maximum absorption wavelength of 600 nm (G256 manufactured by Japanese Photosensitive Pigment Laboratory) by an amount of 0.75 wt%. The quest-host liquid crystal material was injected into a cell of 8.5 μm thick at a temperature (120°C) higher than a nematic-isotropic phase transition temperature (about 105°C). Under the above conditions, the value d/p of about 1.0 was obtained.

With the value of d/p of about 1.0, liquid crystal molecules of the liquid crystal display device twist by about 360° from the upper substrate toward the lower substrate. For comparisons, conventional type liquid crystal display devices having a twist of 360° and rubbed substrates were formed. The electro-optic characteristics of liquid crystal display devices according to the embodiment and conventional techniques were measured.

The measurement was performed by using the liquid crystal display devices with a reflection plate 7a being disposed at the back of a back substrate of the liquid crystal cell. The liquid crystal display device of the embodiment had a contrast of 3.0, whereas the conventional liquid crystal display device had a contrast of about 2.9. Although a distinctive effect as with a small d/p value was not confirmed, the following advantageous effects were obtained apart from the contrast.

The orientations in a voltage applied state were observed with a polarization microscope. Stripe domain defects were observed in a conventional liquid crystal display device, but were not observed in an embodiment liquid crystal display device. The measured electro-optic characteristics of conventional liquid crystal display devices showed hysteresis different between a voltage rise and a voltage fall. However, in embodiment liquid crystal display devices, hysteresis was not observed or was very small when compared to the conventional liquid crystal display device.

Liquid crystal display devices having the d/p values of 2.0, 3.0, and 4.0 were also prepared and their electro-optic characteristics were measured. The advantageous effects as above were also observed.

If a twist angle in a liquid crystal cell is set large, the off-state characteristics of even a conventional liquid crystal display device are improved and a difference between embodiment and conventional devices becomes small. It has been found however that although the conventional liquid crystal device generates stripe domain defects and hysteresis, the embodiment liquid crystal display device does not generate them, or even if it generates, they are very small. The reason why stripe domain defects are not generated may be attributed to a small size of each domain and a spatial limit in such a small area. The reason why hysteresis is hard to be generated is not estimated to date.

If there are regions having 90° different orientations in an optical path of a single light beam in the liquid crystal cell, the contrast can be improved. In order to exhibit this function at the most, orientation directions of two consecutive adjacent micro domains are preferably perpendicular to each other. Forming a number of micro domains over the substrate area and setting a perpendicular orientation direction of two consecutive micro domains, can be realized by performing such orientation process.

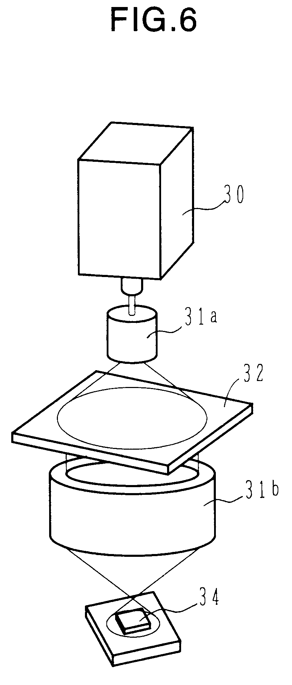

Fig.6 illustrates a method of forming fine orientation areas. A substrate 34 has an optical polarization memory film formed on the surface thereof. An orientation process can be performed by applying polarized light to the optical polarization memory film. Light emitted from a light source 30 is applied via an optical system 31a to a mask 32. Formed on the mask 32 are a number of fine polarizing areas whose two consecutive areas have 90° different polarization angles. Therefore, light beams passed through the mask 32 become polarized light beams having 90° different polarization directions. These polarized light beams are applied via an optical system 31b to the optical polarization memory film on the substrate 34. In this manner, a number of fine orientation areas can be formed in the optical polarization memory film on the substrate 34. Alternatively, such two types of orientation areas can also be formed by using two complementary masks, each having a light shielding area and a polarizing light transmission area.

Manufacturing an orientation structure using an optical polarization storage film is detailed in a patent application by the present assignee (Japanese Patent Laid-open Publication No.6-194655, corresponding to US patent application S.N. 08/265,654 filed on June 24, 1994, which is incorporated herein by reference).

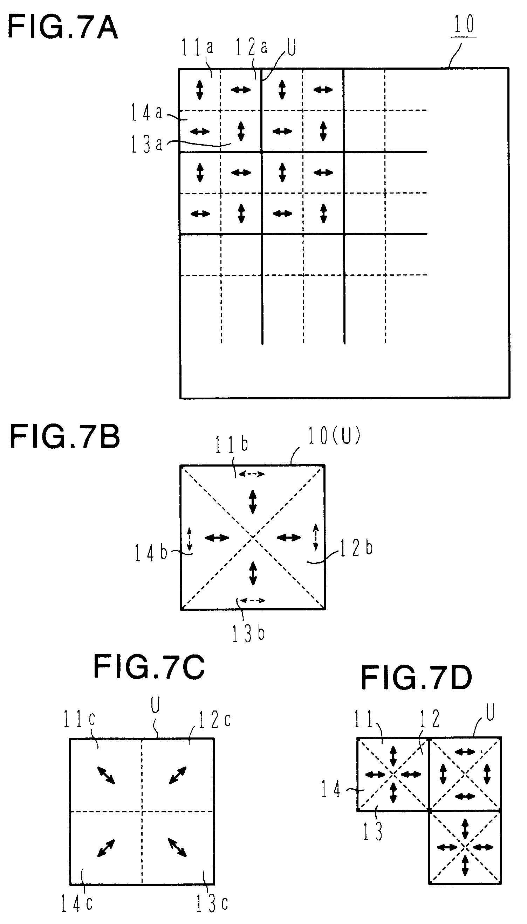

Figs.7A to 7D show examples of the orientation structure of two consecutive micro domains having 90° different orientation directions.

In Fig.7A, a number of unit areas U are formed in each pixel 10, and each unit area U has four micro domains 11a, 12a, 13a, and 14a. Each set of two consecutive micro domains has a 90° different orientation direction. With micro domains in horizontal and vertical orientations distributed in a checkerboard shape, a liquid crystal display device having an improved contrast can be formed.

Instead of forming a number of unit areas U in one pixel area, one unit area or two unit areas may be formed in one pixel area.

In Fig.7B, a rectangular pixel area 10 or unit area U is divided into four micro domains by diagonal lines, and two consecutive adjacent micro domains have 90° different orientation directions. The orientation direction is generally parallel or vertical to the side of the rectangular pixel area. In this configuration, adjacent micro domains across the pixel boundary would become the same. It would be better to also provide another kind of pixel having polarization directions shown by broken arrows and dispose two kinds of pixels in a checkerboard shape, as will be illustrated in Fig.7D.

In Fig.7C, similar to Fig.7A, a rectangular unit area U has four rectangular micro domains, and each micro domain has an oblique (diagonal line direction) orientation structure. The orientation direction is about 45° relative to the side of a micro domain and the side of a pixel area.

In Fig.7D, a rectangular unit area U is divided in micro domains by diagonal lines, and each micro domain has orientation structures in horizontal and vertical directions.

The structure having an orientation direction different by 90° between two consecutive adjacent micro domains is not limited to the above examples. The orientation process for micro domains is not limited to an optical polarization memory film. For example, rubbing in each orientation direction using a mask with apertures may be utilized.

The present invention has been described in connection with the preferred embodiments. The invention is not limited only to the above embodiments. It is apparent to those skilled in the art that various modifications, improvements, combinations and the like can be made without departing from the scope of the appended claims.

## Claims

1. A guest-host type liquid crystal display comprising:
   a pair of substrates; and
   a guest-host type liquid crystal layer containing liquid crystal and dichroic pigment sandwiched between the pair of substrates,
   wherein the liquid crystal in said guest-host type liquid crystal layer has no twist angle or a constant twist angle in the direction perpendicular to the surface of the substrate and domains of two or more orientation directions are distributed in a plane parallel to the surface of the substrate.

2. A guest-host type liquid crystal display device according to claim 1, wherein said guest-host type liquid crystal layer includes a number of micro domains each being extended between said pair of substrates, and the orientation directions of the liquid crystal molecules in each micro domain are aligned in a plane parallel to the surface of the substrate.

3. A guest-host type liquid crystal display device according to claim 1, wherein said guest-host type liquid crystal layer includes a number of micro domains, each extending between said pair of substrates and having an orientation direction in a plane parallel to the substrate surface, and regions among said micro domains where the orientation directions of the liquid crystal molecules change successively in a plane parallel to the substrate surface.

4. A guest-host type liquid crystal display device according to claim 1, wherein the orientation directions of the liquid crystal molecules of said guest-host type liquid crystal layer change successively in a microscopic level in a plane parallel to the surface of the substrate.

5. A guest-host type liquid crystal display device according to one of claims 1-4, wherein said pair of substrates has no intentionally formed orientation structure for the liquid crystal molecules.

6. A guest-host type liquid crystal display device according to one of claims 1-5, wherein said liquid crystal is nematic liquid crystal, chiral nematic liquid crystal, or cholesteric liquid crystal.

7. A guest-host type liquid crystal display device according to claim 1 or 2, wherein said guest-host type liquid crystal layer includes a number of micro domains having two or more orientation directions and the two consecutive micro domains have a perpendicular orientation direction relationship in a plane parallel to the surface of the substrate, and no twist or a constant twist in a direction vertical to the surface of the substrate.

8. A guest-host type liquid crystal display device according to one of claims 1-4, 6 and 7, wherein said pair of substrates has an intentionally formed orientation structure for the liquid crystal molecules.

9. A guest-host type liquid crystal display device according to one of claims 1-8, further comprising a reflection plate disposed outside said pair of substrates.

10. A guest-host type liquid crystal display device according to one of claims 1-8, further comprising a reflection plate disposed inside said pair of substrates.

11. A guest-host type liquid crystal display device according to one of claims 1-10, wherein said pair of substrates has a gap d and satisfies the condition of $0 (< or =) d/p (< or =) 4$, where p represents a chiral pitch of said quest-host type liquid crystal layer, and $(< or =)$ stands for smaller than or equal to.

# FIG.1A

# FIG.1B

# FIG.1D

# FIG.1C

# FIG.1E

EP 0 727 690 A1

# FIG.2A

# FIG.2B

9

# FIG.3A

1 a
2 a

2 b
1 b

# FIG.3B

1 a
2 a

6

2 b
1 b

# FIG.3C

1 a
2 a

6

2 b
1 b

21

# FIG.3D

1 a
2 a

6

2 b
1 b

EP 0 727 690 A1

# FIG.4A

# FIG.4B

11

# FIG.5A

# FIG.5B

# FIG.6

30

31a

32

31b

34

# FIG.7A

# FIG.7B

# FIG.7C

# FIG.7D

**European Patent Office**

## EUROPEAN SEARCH REPORT

Application Number

EP 96 10 2279

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 632 311 (STANLEY ELECTRIC CO LTD ) 4 January 1995 * abstract; claims 1,4,5,9; figures * | 1,6-8,11 | G02F1/1337 G02F1/139 |
| D | & JP-A-06 194 655 (STANLEY ELECTRIC) | | |
| A | EP-A-0 589 264 (STANLEY ELECTRIC CO LTD ) 30 March 1994 * abstract; claims 1-7; figure 3 * | 1-5,8,11 | |
| D | & JP-A-06 194 655 (STANLEY ELECTRIC ) | | |
| P,X | PATENT ABSTRACTS OF JAPAN vol. 95, no. 004 & JP-A-07 104297 (DAINIPPON INK & CHEM INC), 21 April 1995, * abstract * | 1-6 | |
| P,X | PATENT ABSTRACTS OF JAPAN vol. 95, no. 011 & JP-A-07 294934 (SEIKO EPSON CORP), 10 November 1995, * abstract * | 1,6,8 | |

TECHNICAL FIELDS SEARCHED (Int.Cl.6)

G02F

The present search report has been drawn up for all claims

| Place of search | Date of completion of the search | Examiner |
|---|---|---|
| THE HAGUE | 28 May 1996 | Iasevoli, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)